# EUROPÄISCHE PATENTSCHRIFT

(11) **EP 3 560 668 B1**
(45) Veröffentlichungstag und Bekanntmachung des Hinweises auf die Patenterteilung: **17.02.2021**
(21) Anmeldenummer: 19159884.6
(22) Anmeldetag: 28.02.2019
(51) Int. Cl.: B26D 7/26

(54) **VORRICHTUNG UND VERFAHREN ZUM SCHNEIDEN EINES PRODUKTS AUS SÜSSWARENMASSE**
DEVICE AND METHOD FOR CUTTING A PRODUCT OF CONFECTIONERY MASS
DISPOSITIF ET PROCÉDÉ DE COUPE D'UN PRODUIT FAIT D'UNE MASSE POUR CONFISERIE

(30) Priorität: 27.04.2018 DE 102018206641
(43) Veröffentlichungstag der Anmeldung: 30.10.2019
(73) Patentinhaber: Syntegon Technology GmbH, 71332 Waiblingen (DE)
(72) Erfinder: Kopiec, Fabian, 40227 Düsseldorf (DE); Morcinczyk, Marcel, 47051 Duisburg (DE); Breckel, Waldemar, 47877 Willich (DE); Gaier, Jonathan, 41747 Viersen (DE); Werner, Robert, 40699 Erkrath (DE); Naus, Rene, 47669 Wachtendonk (DE); Schongen, Joerg, 47929 Grefrath (DE)
(74) Vertreter: Daub, Thomas

(56) Entgegenhaltungen:
- WO-A1-03/101685
- DE-A1- 3 836 503
- NL-C2- 1 018 896
- US-A- 3 837 265
- US-A- 4 054 394
- US-A- 4 577 440

## Beschreibung

### Stand der Technik

Die vorliegende Erfindung betrifft eine Vorrichtung und ein Verfahren zum Schneiden eines Produkts aus Süßwarenmasse, nach der Gattung der unabhängigen Ansprüche.

Eine gattungsgemäße Vorrichtung zum Abtrennen von Einzelstücken von einem kontinuierlich bewegten Massestrang ist aus der EP 1094717 B1 bekannt. Es sind zwei beidseitig des Massestrangs angeordnete, quer und längs zur Förderrichtung des Massestrangs bewegbare, senkrecht zur Längsrichtung des Massestrangs ausgerichtete Schneidmesser vorgesehen, die miteinander gekoppelt und von einem gemeinsamen Antrieb betätigt werden. Die Schneidmesser laufen jeweils auf einer Kreisbahn um. Die beiden Schneidmesser sind jeweils auf einem scheibenförmigen Element auf einer Achse parallel zur Drehachse des Elements angeordnet und die Schneidmesser tragenden Messerhalter sind zum Ausrichten der Schneidmesser senkrecht zur Förderrichtung des Massestrangs mittels wenigstens einer Stange miteinander gekoppelt, die sich seitlich der Schneidmesser und mit diesen ausgerichtet erstreckt, wobei die Messerhalter auf der wenigstens einen Stange verschiebbar angeordnet sind.

Aus der TWM463143 Y ist eine Schneidvorrichtung bekannt, die zwei Format-Messerwellen in der Maschine verwendet und je nach Format die eine oder die andere Format-Messerwelle zum Einsatz kommt. Die Anzahl der Formate ist damit begrenzt.

Es ist Aufgabe der vorliegenden Erfindung, die Flexibilität und Sicherheit der Vorrichtung weiter zu erhöhen. Diese Aufgabe wird gelöst durch die Merkmale der unabhängigen Ansprüche.

### Offenbarung der Erfindung

Die erfindungsgemäße Vorrichtung und das erfindungsgemäße Verfahren zum Schneiden eines Produkts aus Süßwarenmasse, mit den Merkmalen der unabhängigen Ansprüche weisen demgegenüber den Vorteil auf, dass sich die Flexibilität und Sicherheit der Anordnung weiter erhöht. Der Benutzer kann individuell für jedes Schneidmittel die Position und den Abstand zum benachbarten Schneidmittel je nach Bedarf verändern. Hierzu ist erfindungsgemäß eine Verstelleinrichtung vorgesehen zum Verschieben des Schneidmittels entlang der Schneidwelle. Ein Austausch einer kompletten Messerwelle ist nicht mehr erforderlich. Eine automatische Verstellung der Produktbreite wird dadurch möglich, ohne zusätzliche Teile ein- oder ausbauen zu müssen. Dies ermöglicht auch eine Optimierung der Schnittbreite des Produkts und kann Abfall reduzieren. Durch das Wegfallen der Montage der Format-Messerwelle bei einem Wechsel der Produktbreite sind Montagefehler, Einstellfehler oder Beschädigungen der Schneidmittel durch den Bediener ausgeschlossen. Es entsteht eine Reduzierung der Rüstzeit und somit eine schnellere Verfügbarkeit der Linie bzw. der Vorrichtung. Die Erhöhung der Produktionszeit steigt durch einen automatischen und schnellen Ablauf des Formatwechsels. Die damit einhergehende Zeit- und Kostenersparnis ist ein weiterer Vorteil. Außerdem erhöht sich die Sicherheit für den Bediener. Die bisherigen Möglichkeiten beim Wechseln der Messerwelle bzw. des Formats waren immer damit verbunden, die Schutzabdeckung zu öffnen bzw. zu entfernen. Erfindungsgemäß ist eine Realisierung der Formatumstellung vollautomatisch hinter einer geschlossenen Schutzabdeckung möglich. Der Bediener ist somit außerhalb des Gefahrenbereichs und kann nicht mehr mit Schneidmitteln in Kontakt geraten. Die Sicherheit der Vorrichtung erhöht sich weiter.

In einer zweckmäßigen Weiterbildung ist zumindest eine Fixiereinrichtung vorgesehen zum lösbaren Fixieren des Schneidmittels an der Schneidwelle. Dadurch lässt sich das Schneidmittel einerseits sicher mit der Schneidwelle verbinden, um das Produkt zuverlässig zu schneiden. Andererseits kann durch die lösbare Ausbildung der Fixiereinrichtung das Schneidmittel entlang der Schneidachse zur Veränderung der Position verschoben werden, so dass eine schnelle und flexible Anpassung an gewünschte Schnittbreiten besonders einfach erfolgt, ohne einen Austausch der kompletten Schneidvorrichtung vornehmen zu müssen.

In einer zweckmäßigen Weiterbildung wirkt die Verstelleinrichtung zum Lösen oder Fixieren des Schneidmittels an der Schneidwelle auf die Fixiereinrichtung ein. Die ohnehin zum Verschieben des Schneidmittels vorhandene Verstelleinrichtung kann als Aktuator für die Fixiereinrichtung ohne großen Zusatzaufwand verwendet werden. Dadurch kann die Vorrichtung einfach ausgebildet bleiben.

In einer zweckmäßigen Weiterbildung ist die Verstelleinrichtung dazu ausgebildet, zumindest einen Greifer zu dem Schneidmittel zu bewegen, das Schneidmittel und/oder eine mit dem Schneidmittel verbundenen Träger zu greifen, und den Greifer mit dem Schneidmittel entlang der Schneidwelle zu bewegen. Damit lässt sich in einfacher Art und Weise die komplette Neupositionierung in einem Schritt lediglich unter Verwendung einer Verstelleinrichtung durchführen.

In einer zweckmäßigen Weiterbildung ist die Verstelleinrichtung und/oder die Schneidwelle zum Lösen oder Fixieren des Schneidmittels bezüglich der Schneidwelle dahingehend ausgebildet, dass eine Relativbewegung zwischen Schneidmittel und Schneidwelle erzeugt wird. Damit kann die Fixierung und das Lösen durch bereits ohnehin vorhandene Antriebsmittel vorgenommen werden. Dadurch kann eine erhöhte Komplexität der Vorrichtung vermieden werden.

Weitere zweckmäßige Weiterbildungen ergeben sich aus weiteren abhängigen Ansprüchen und der Beschreibung.

### Kurze Beschreibung der Zeichnung

Nachfolgend werden unter Bezugnahme auf die begleitende Zeichnung bevorzugte Ausführungsbeispiele der Erfindung im Detail beschrieben. In der Zeichnung ist:

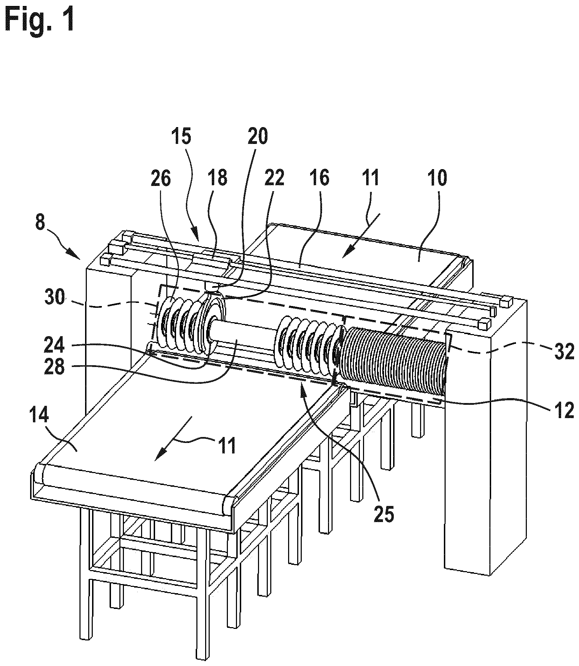

- Figur 1: eine perspektivische Ansicht der Vorrichtung,

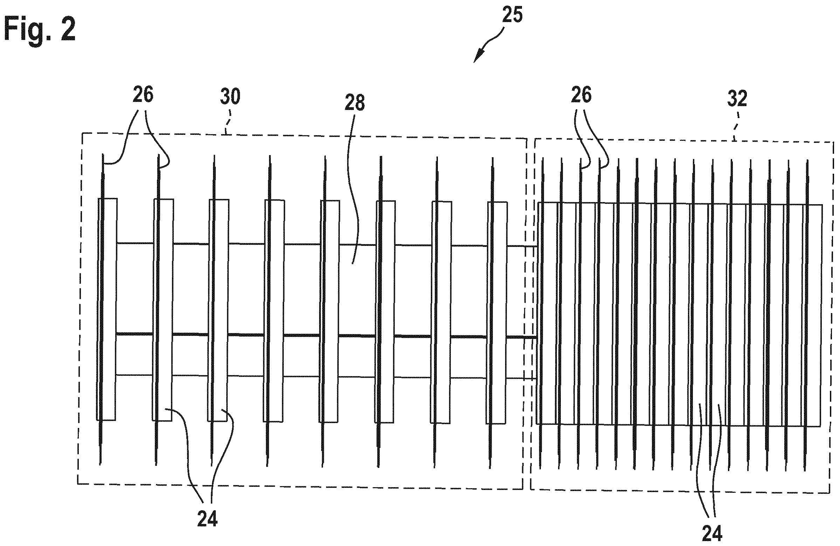

- Figur 2: die Schneidvorrichtung mit Halter, Schneidmittel und Schneidwelle bei einem Maximalabstand der Schneidmittel,

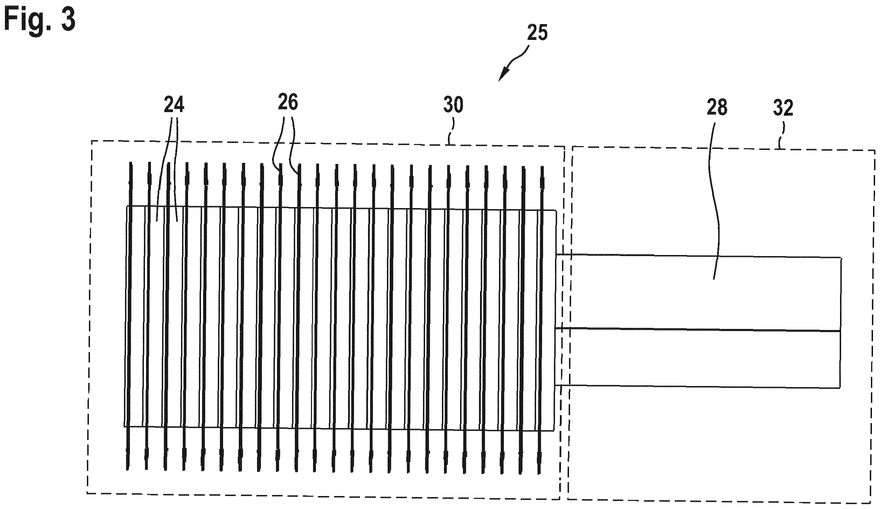

- Figur 3: die Schneidvorrichtung gemäß Figur 2 bei einem Minimalabstand der Schneidmittel,
- Figur 4: eine erste Variante zum lösbaren Klemmen des Schneidmittels in einer perspektivischen Ansicht und zugehörigem Schnitt durch Schneidmittel und Halter,
- Figur 5: die erste Variante gemäß Figur 4 zusammen mit einer Klemmwelle im Schnitt,
- Figur 6: eine weitere Variante zum lösbaren Klemmen der Schneidmittel in einer perspektivischen Ansicht sowie
- Figur 7 und 8: eine schematische Darstellung der Variante gemäß Figur 6 mit einem Greifer in unterschiedlichen Positionen zum Lösen und Klemmen.

### Bevorzugte Ausführungsformen der Erfindung

Eine Vorrichtung 8 zum Schneiden eines Produkts, insbesondere aus Süßwarenmasse, umfasst zumindest eine Transporteinrichtung 10. Die Transporteinrichtung 10 ist beispielsweise als Transportband ausgebildet. Die Transporteinrichtung 10 führt einen zu schneidenden Produktteppich in Transportrichtung 11 einer Schneidvorrichtung 25 zu. Das geschnittene Produkt wird durch eine weitere Transporteinrichtung 14 von der Schneidvorrichtung 25 zur Weiterverarbeitung entfernt.

Die Schneidvorrichtung 25 umfasst mehrere Schneidmittel 26, insbesondere ein Schneidmesser, die auf einer Schneidwelle 28 angeordnet sind. Die Schneidmittel 26 sind beispielsweise ringförmig ausgebildet. Die Schneidkante weist einen in der Regel spitz zulaufenden Abschnitt auf, um in geeigneter Weise das Produkt in Transportrichtung 11 in Streifen zu schneiden. Hierzu können die Schneidmittel 26 zusammen mit der Schneidwelle 28 rotieren.

Das Schneidmittel 26 ist jeweils durch einen Halter 24 verschiebbar mit der Schneidwelle 28 fixiert. Ist der Halter 24 gelöst, kann das Schneidmittel 26 entlang der Schneidwelle 28 verschoben werden. Ist der Halter 24 fixiert, so bewegt sich das Schneidmittel 26 zusammen mit der rotierenden Schneidwelle 28. Der Halter 24 ist beispielsweise ringförmig bzw. hülsenförmig ausgebildet und stellt die Verbindung her zwischen der Schneidwelle 28 und dem Schneidmittel 26. Das Schneidmittel 26 ist fest mit dem Halter 24 verbunden. Insbesondere die Breite des vorzugsweise ringförmigen Halters 24 ist üblicherweise etwas breiter gewählt als die Breite des Schneidmittels 26, um eine sichere lösbare Verbindung mit der Schneidwelle 28 zu gewährleisten. Außerdem dient der Halter 24 als Greiffläche für einen Greifer 20 zum Bewegen des Halters 24 mit Schneidmittel 26. Die Schneidwelle 28 ist quer zur Transportrichtung 11 angeordnet. Die Schneidmittel 26 mit der zugehörigen Schneidkante sind parallel zur Transportrichtung 11 ausgerichtet. Der Abstand zweier benachbarter Schneidmittel 26 definiert die Breite des Produktstrangs bzw. die Produktstrangbreite.

Parallel zur Schneidwelle 28 ist ein Gegenhalter 12 angeordnet. Zwischen dem Gegenhalter 12 und den Schneidkanten der Schneidmittel 26 kommt das zu schneidende Produkt bzw. der Produktteppich zu liegen. Der Gegenhalter 12 kann beispielsweise als Gegenschnittwalze oder als Platte ausgeführt sein, über die das Produkt geführt wird. Der Gegenhalter 12 erstreckt sich quer zur Transportrichtung 11 über die gesamte Breite der Transporteinrichtung 10 bzw. 14.

Entlang einer Führung 16 lässt sich ein Schlitten 18 bewegen. Der Schlitten 18 lässt sich vorzugsweise parallel zur Achse der Schneidwelle 28 und somit quer zur Transportrichtung 11 bewegen. Die Führung 16 ist beispielsweise als Führungsstange bzw. zwei oder mehrere, parallel zueinander und auch parallel zu der Schneidwelle 28 positionierte Führungsstangen ausgebildet. Im Ausführungsbeispiel befindet sich die Führung 16 oberhalb der Schneidwelle 28. Diese könnte jedoch auch seitlich oder nach Platzverhältnissen an einer anderen geeigneten Stelle angeordnet sein. An dem Schlitten 18 ist zumindest ein Greifer 20 mit einem bewegbaren Greifarm 22 angeordnet. Der Greifer 20 mit daran befestigtem Greifam 22 lässt sich durch den Schlitten 18 in eine geeignete Position verfahren, um das einzelne Schneidmittel 26 mit zugehörigem Halter 24 relativ zu der Schneidwelle 28 zu verschieben. Die beschriebenen Komponenten Führung 16, Schlitten 18, Greifer 20, Greifarm 22 bilden eine Verstelleinrichtung 15 zur Verstellung des Schneidmittels 26 relativ zur Schneidwelle 28, insbesondere in axialer Richtung der Schneidwelle 28. Darüber hinaus kann die Verstelleinrichtung 15 auch dazu eingerichtet sein, den Halter 24 und/oder das Schneidmittel 26 relativ zu der Schneidwelle 28 beispielsweise in einer Bewegung um die Achse der Schneidwelle 28 zu bewegen, beispielsweise rotierend. Weiterhin kann die Verstelleinrichtung 15 dazu dienen, einen Mechanismus am Halter 24 und/oder Schneidmittel 26 zu betätigen, um beispielsweise ein Klemmen oder Lösen des Halters 24 relativ zu der Schneidwelle 28 zu ermöglichen.

Prinzipiell gibt es bei der Vorrichtung 8 zwei unterschiedliche Bereiche 30, 32, in denen sich die Schneidmittel 26 befinden. Befindet sich das Schneidmittel 26 im Wesentlichen im Bereich der Transporteinrichtung 10 bzw. das Schneidmittel 26 kann auf das von der Transporteinrichtung 10 bewegte Produkt einwirken, so befindet sich das Schneidmittel 26 in einem Produktionsbereich 30. Kann das Schneidmittel 26 nicht auf das Produkt einwirken, befindet sich das Schneidmittel in einem Parkbereich 32. Der Parkbereich 32 zeichnet sich dadurch aus, dass die Schneidwelle 28 in diesem Bereich nicht oberhalb der Transporteinrichtung 10 angeordnet ist, sondern seitlich. In dem Parkbereich 32 werden diejenigen Schneidmittel 26 positioniert, die nicht für den momentanen Produktionsprozess benötigt werden, die sich also nicht im Produktionsbereich 30 befinden sollen.

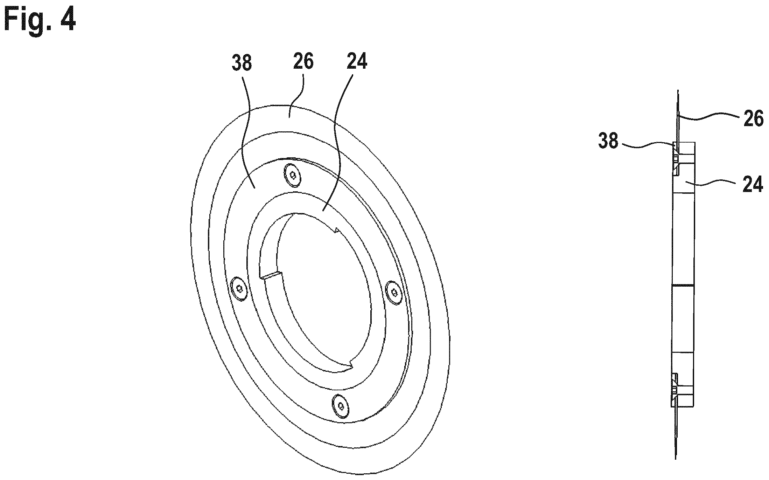

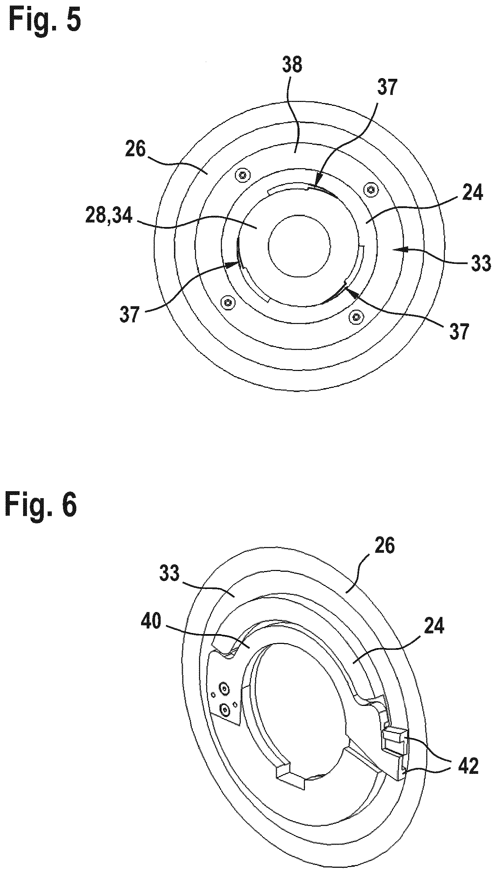

In den Figuren 4 und 5 ist eine erste Variante zum lösbaren Klemmen der einzelnen Schneidmittel 26 mit Hilfe einer Fixiereinrichtung 33 näher gezeigt. Das Schneidmittel 26 ist über einen Ring 38 mit dem Halter 24 beispielsweise durch Schraubverbindungen befestigt wie dem Schnitt in Figur 4 zu entnehmen.

Wie in Figur 5 gezeigt ist zumindest eine Keilwelle 34 vorgesehen. Die Keilwelle 34 ist mit der Schneidwelle 28 fest verbunden. Alternativ kann die Keilwelle 34 Bestandteil der Schneidwelle 28 sein. Die Keilwelle 34 ist beispielsweise im Wesentlichen zylinderförmig ausgeführt, wobei der Außendurchmesser der Keilwelle 34 nicht über alle Bereiche konstant verläuft, sondern nimmt entlang des Umfangs keilförmig zu. Im Anschluss an den keilförmigen Bereich 37 nimmt die Außenkontur wieder radial ab. Im Anschluss daran nimmt sie wieder in Form eines weiteren keilförmigen Bereichs 37 radial zu. Beispielhaft sind drei keilförmige Bereiche 37 vorgesehen. Die Außenkontur der Keilwelle 34 wirkt zusammen mit dem Halter 24.

Auch die Innenkontur des Halters 24 weist keilförmige Bereiche 37 auf, die mit den keilförmigen Bereichen 37 der Keilwelle 34 reibschlüssig zusammenwirken. Die Anzahl der keilförmigen Bereiche 37 des Halters 24 entspricht derjenigen der Keilwelle 34. Auch die Geometrie der keilförmigen Bereiche 37 des Halters 24 ähnelt derjenigen der Keilwelle 34. Ein Fixieren bzw. ein Lösen des Schneidmittels 26 relativ zur Schneidwelle 28 wird möglich durch eine Relativbewegung des Halters 24 gegenüber der Keilwelle 34. Durch die Klemmwirkung der keilförmigen Bereiche 37 von Keilwelle 34 und Halter 24 erfolgt das Fixieren. Eine gegenläufige Bewegung von Keilwelle 34 und Halter 24 führt zum Lösen der Fixierung, sodass eine Verschiebung des Halters 24 entlang der Keilwelle 34 bzw. Schneidwelle 28 möglich wird.

Durch eine entgegengesetzte Drehbewegung von Halter 24 zu Keilwelle 34 erfolgt ein Lösen des Schneidmittels 26 von der Schneidwelle 28, um eine Verschiebung des Schneidmittels 26 in axialer Richtung der Schneidwelle 28 zu ermöglichen. Die Erzeugung der Relativbewegung kann erfolgen wie bereits oben beschrieben. Hierzu greift der Greifer 20 den überstehenden Teil des Halters 24 und fixiert ihn. Anschließend vollzieht die Keilwelle 34 bzw. Schneidwelle 28 eine entsprechende kurze Drehbewegung, um die Klemmwirkung der keilförmigen Bereiche 37 lösen. Ein Klemmen wird durch eine entsprechende gegengesetzte Bewegung der Keilwelle 34 bzw. Schneidwelle 28 relativ zu dem Halter 24 bewirkt.

In dem Ausführungsbeispiel gemäß den Figuren 4 und 5 bilden die Keilwelle 34 sowie die keilförmigen Bereiche 37 sowohl an der Keilwelle 34 wie auch an dem Halter 24 die Fixiereinrichtung 33. Die Betätigung der Fixiereinrichtung 33 erfolgt wie beschrieben über ein Aufbringen einer Relativbewegung zwischen Keilwelle 34 bzw. Schneidwelle 28 und den keilförmigen Bereichen 37 an dem Halter 24.

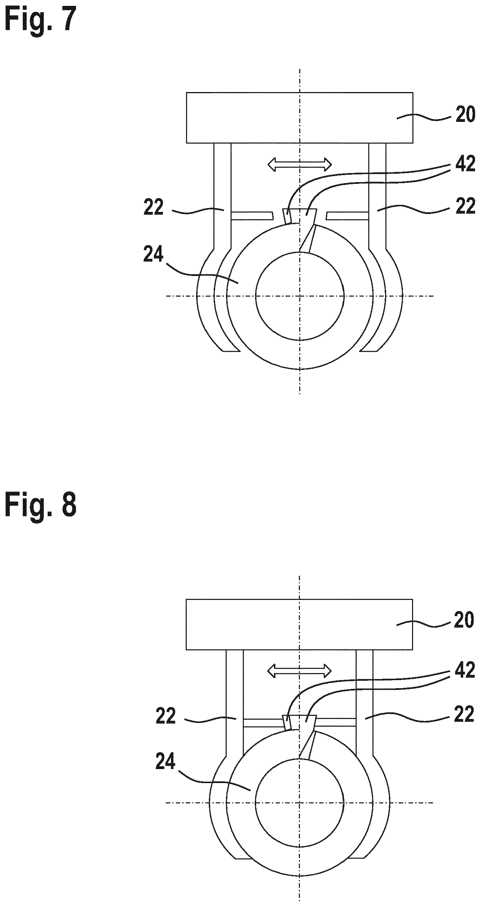

In einem alternativen Ausführungsbeispiel gemäß den Figuren 6 bis 8 kann eine Klemmung des Schneidmittels 26 relativ zur Schneidwelle 28 unter Verwendung der Fixiereinrichtung 33 durch das Vorsehen eines Klemmarms 40 im Zusammenwirken mit dem Halter 24 erfolgen. An dem Klemmarm 40 wie auch an dem Halter 24 sind jeweils radial nach außen ragende Stege 42 angeordnet. Durch eine Relativbewegung des Halters 24 relativ zum Klemmarm 40 kann die Klemmung des Schneidmittels 26 bzw. Halters 24 relativ zur Schneidwelle 28 vorgenommen oder aufgehoben werden. Eine Betätigung des Klemmarms 40 erfolgt, indem der Greifarm 22 des Greifers 20 sowohl mit der Oberseite des Halters 24 und mit dem Klemmarm 40 in Kontakt kommt wie auch die beiden Stege 42 zugleich zusammendrückt wie den Figuren 7 und 8 zu entnehmen. Dadurch löst sich der Klemmmechanismus, indem so beispielsweise eine über den Klemmarm 40 oder einen sonstigen Klemmmechanismus bewirkte Klemmung des Halters 24 relativ zur Schneidwelle 28 aufgehoben wird. Zusätzlich kann eine Passfeder zur Drehmomentübertragung verwendet werden.

Bei dem Ausführungsbeispiel gemäß den Figuren 6-8 wird die Fixiereinrichtung 33 gebildet durch den Klemmarm 40 sowie den weiteren Arm am Halter 24, sowie gegebenenfalls durch Klemmmittel wie beispielsweise die nicht gezeigte Passfeder oder Ähnliches. Die Aktivierung dieser Fixiereinrichtung 33 erfolgt durch Betätigung der Stege 42. Zugleich hält der Greifer 20 den Klemmarm 40 bzw. den Arm am Halter 24, um die Fixiereinrichtung 33 zu aktivieren.

Ein Klemmen der Fixiereinrichtung 33 bewirkt eine feste Verbindung zwischen Schneidmittel 26 und Schneidwelle 28. Ein Lösen der Fixiereinrichtung 33 bewirkt eine Verschiebbarkeit des Schneidmittel 26 entlang der Schneidwelle 28.

Die beschriebene Vorrichtung 8 arbeitet wie folgt. Bevor eine neue Produktstrangbreite eingestellt wird, wird von einem in einer Steuerung hinterlegten Programm geprüft, ob eine Verstellung aller Schneidmittel 26 oder nur einzelner Schneidmittel 26 notwendig ist. Ist eine Verstellung aller Schneidmittel 26 notwendig, so werden zunächst diejenigen Schneidmittel 26 in den Parkbereich 32 gefahren, die nicht benötigt werden. Anschließend werden die zu verwendenden Schneidmittel 26 einzeln auf die jeweilige Position verfahren. Die Positionen können frei gewählt werden und somit unterschiedlich sein.

Die Schneidmittel 26 können automatisch, einzeln und stufenlos auf die gewünschte Produktbreite eingestellt und einzeln an der Schneidwelle 28 fixiert werden. Je nach der Geometrie der Halter 24 können unterschiedliche Breiten, beispielsweise zwischen 14 mm bis 200 mm eingestellt werden. Die Einstellung der Produktbreite kann manuell am Bedienpanel vorgenommen werden. Alternativ könnte die Breite über ein Programm beispielsweise mit einer Rezeptverwaltung gekoppelt sein. Über einen Soll-Ist-Vergleich wird die gewünschte Position angefahren. Die Einstellung der Position der Schneidmittel 26 kann sowohl im Betriebszustand wie auch im Ruhezustand der Vorrichtung 8 erfolgen.

Zunächst werden die einzelnen Schneidmittel 26 gelöst, indem der Halter 24 nur noch verschiebbar, nicht mehr jedoch fest mit der Schneidwelle 28 verbunden ist. Zum Verschieben der Schneidmittel 26 ist der Greifer 20 mit zugehörigem Greifarm 22 vorgesehen. Hierzu bewegt der Schlitten 18 den Greifer 20 bzw. Greifarm 22 über das zu verschiebende Schneidmittel 26. Die Position wird über ein entsprechendes Wegmessverfahren erkannt. Der Greifarm 22 ist mit dem Greifer 20 verbunden, der beispielsweise als elektromechanischer Klemmgreifer ausgeführt ist. Der Greifer 20 führt eine Greifbewegung des Greifarms 22 mit einer vordefinierten Spannkraft aus und greift das einzelne Schneidmittel 26 bzw. den zugehörigen Halter 24, um dieses zu verfahren. Zunächst wird die Klemmung des Halters 24 mit der Schneidwelle 28 wie beispielhaft in den Figuren 4-7 ausgeführt gelöst. Die Positionierung des Greifers 20 erfolgt mittels einer spielfreien Führung 16. Für jedes einzelne Schneidmittel 26 erfolgt nun die genaue Positionierung durch den Greifer 20 an der gewünschten Position an der Schneidwelle 28 im Produktionsbereich 30. In der gewünschten Position wird die Klemmung des Halters 24 mit der Schneidwelle 28 wieder vorgenommen. Der Vorgang wiederholt sich für sämtliche gewünschte Schneidmittel 26. Nicht benötigte Schneidmittel 26 werden platzsparend ohne Abstand der Schneidmittel 26 bzw. der zugehörigen Halter 24 zueinander in dem Parkbereich 32 der Vorrichtung 8 geparkt, bis diese später wieder zum Einsatz kommen. Der Parkbereich 32 ist außerhalb des Produktionsbereichs 30. Ebenso ist es möglich, dass ein aktuell verwendetes Schneidmittel 26 gegen ein parkendes Schneidmittel 26 beispielsweise aufgrund von Verschleißerscheinungen ausgetauscht wird.

Jedes Schneidmittel 26 ist auf einem separaten Halter 24 montiert. Der Halter 24 ist vorzugsweise als Klemmhalter ausgebildet. Das Klemmen des Halters 24 kann eine kraftschlüssige, formschlüssige oder kraft-formschlüssige Verbindung sein. So könnte eine Klemmverbindung zwischen Halter 24 und Schneidwelle 28 über eine Keilwelle 34 erfolgen, wie bereits in Verbindung mit den Figuren 4 und 5 erläutert. Dies könnte über eine Welle/Nabe-Verbindung unter Verwendung von aufeinander abgestimmten, miteinander in der Verbindung tretenden Keilprofilen 37, die durch gegenseitiges Verdrehen in Reibschluss gebracht werden. Die Verdrehung des Halters 24 relativ zu der Schneidwelle 28 kann beispielsweise durch eine Drehbewegung der Schneidwelle 28 in Verbindung mit einem die Schneidwelle 28 antreibenden Motor aufgebracht werden. In diesem Fall hält der Greifer 20 bzw. der Greifarm 22 den Halter 24 unmittelbar oder über das Schneidmittel 26, während die Schneidwelle 28 beispielsweise drehmomentgesteuert eine rotatorische Bewegung aufbringt, bis das Schneidmittel 26 gelöst bzw. geklemmt ist.

Alternativ könnte der Greifarm 22 selbst eine Verdrehung des Halters 24 relativ zur Schneidwelle 28 vornehmen. Hierbei muss die Schneidwelle 28 starr sein, während der Greifarm 22 eine rotatorische Bewegung ausführt. In dieser Variante wird über eine Vorspannung kraft- oder kraft-formschlüssig geklemmt, abhängig von der auftretenden Kraft. Hierbei kann ein Halter 24 bzw. ein Klemmhalter mit Vorspannung verwendet werden. Über den Greifarm 22 lässt sich der Halter 24 in axialer Richtung (bezogen auf die Schneidwelle 28) verschieben. Um dies zu ermöglichen, wird eine definierte Kraft vom Greifarm 22 auf den Halter 24 übertragen, die höher ist als die Vorspannkraft.

Die beschriebene Vorrichtung eignet sich zum Schneiden von Produkten, im Süßwarenbereich wie beispielsweise zur Herstellung von Süßwarenriegel, Kaugummimassen, Karamellen oder Bonbons.

## Patentansprüche

1. Vorrichtung zum Schneiden eines Produkts aus Süßwarenmasse, umfassend zumindest eine Transporteinrichtung (10) zum Transport des zu schneidenden Produkts, zumindest eine weitere Transporteinrichtung (14) und zumindest eine Schneidvorrichtung (25), umfassend mehrere Schneidmittel (26), die auf zumindest einer Schneidwelle (28) angeordnet sind, wobei die Transporteinrichtung (10) dazu ausgebildet ist, einen zu schneidenden Produktteppich in Transportrichtung (11) der Schneidvorrichtung (25) zuzuführen, wobei die weitere Transporteinrichtung (14) dazu ausgebildet ist, das geschnittene Produkt von der Schneidvorrichtung (25) zur Weiterverarbeitung zu entfernen, **dadurch gekennzeichnet, dass** zumindest eine Verstelleinrichtung (15) vorgesehen ist zum Verschieben des Schneidmittels (26) entlang der Schneidwelle (28).

2. Vorrichtung nach Anspruch 1 **dadurch gekennzeichnet, dass** zumindest eine Fixiereinrichtung (33) vorgesehen ist zum lösbaren Fixieren des Schneidmittels (26) an der Schneidwelle (28).

3. Vorrichtung nach einem der vorhergehenden Ansprüche, **dadurch gekennzeichnet, dass** die Verstelleinrichtung (15) eingerichtet ist zum Lösen oder Fixieren des Schneidmittels (26) an der Schneidwelle (28) auf die Fixiereinrichtung (33).

4. Vorrichtung nach einem der vorhergehenden Ansprüche, **dadurch gekennzeichnet, dass** die Verstelleinrichtung (15) dazu ausgebildet ist, zumindest einen Greifer (20) zu dem Schneidmittel (26) zu bewegen, das Schneidmittel (26) und/oder einen mit dem Schneidmittel (26) verbundenen Träger (24) zu greifen, und den Greifer (20) mit dem Schneidmittel (26) entlang der Schneidwelle (28) zu bewegen.

5. Vorrichtung nach einem der vorhergehenden Ansprüche, **dadurch gekennzeichnet, dass** zum Lösen oder Fixieren des Schneidmittels (26) bezüglich der Schneidwelle (28) die Verstelleinrichtung (15) und/oder die Schneidwelle (28) dazu ausgebildet sind/ist, eine Relativbewegung zwischen Schneidmittel (26) und Schneidwelle (28) zu erzeugen.

6. Vorrichtung nach einem der vorhergehenden Ansprüche, **dadurch gekennzeichnet, dass** die Verstelleinrichtung (15) zumindest einen Greifer (20) und/oder zumindest einen Greifarm (22) und/oder einen Schlitten (18) und/oder eine Führung (16) aufweist.

7. Vorrichtung nach einem der Ansprüche 2-6 **dadurch gekennzeichnet, dass** die Fixiereinrichtung (33) zumindest eine Keilwelle (34), insbesondere als Bestandteil der Schneidwelle (28), und/oder zumindest einen keilförmigen Bereich (37) an der Keilwelle (34) und/oder an einem Träger (24) des Schneidmittels (26) und/oder zumindest einen Klemmarm (40) und/oder zumindest einen Steg (42) zum Betätigen eines Klemmarms (40) umfasst.

8. Vorrichtung nach einem der vorhergehenden Ansprüche, **dadurch gekennzeichnet, dass** zumindest ein Parkbereich (32) vorgesehen ist zur Aufnahme solcher Schneidmittel (26), die nicht zum Schneiden des Produkts benötigt werden.

9. Verfahren zum Schneiden eines Produkts aus Süßwarenmasse, wobei eine Transporteinrichtung (10) ein zu schneidendes Produkt zu einer Schneidvorrichtung (25) transportiert, wobei mehrere Schneidmittel (26) auf zumindest einer Schneidwelle (28) angeordnet sind, wobei die Transporteinrichtung (10) einen zu schneidenden Produktteppich in Transportrichtung (11) der Schneidvorrichtung (25) zuführt, wobei eine weitere Transporteinrichtung (14) das geschnittene Produkt von der Schneidvorrichtung (25) zur Weiterverarbeitung entfernt, **dadurch gekennzeichnet, dass** zumindest eine Verstelleinrichtung (15) zumindest ein Schneidmittel (26) entlang der Schneidwelle (28) verschiebt.

10. Verfahren nach dem vorhergehenden Verfahrensanspruch, **dadurch gekennzeichnet, dass** zunächst eine Fixiereinrichtung (33) gelöst wird, die das Schneidmittel (26) mit der Schneidwelle (28) lösbar fixiert, anschließend die Schneidvorrichtung (25) entlang der Schneidwelle (28) verschoben wird und anschließend das Schneidmittel (26) wieder durch die Fixiereinrichtung (33) mit der Schneidwelle (28) fixiert wird.

11. Verfahren nach einem der vorhergehenden Verfahrensansprüche, **dadurch gekennzeichnet, dass** die Verstelleinrichtung (15) zum Lösen oder Fixieren des Schneidmittels (26) an der Schneidwelle (28) auf die Fixiereinrichtung (33) einwirkt.

12. Verfahren nach einem der vorhergehenden Verfahrensansprüche, **dadurch gekennzeichnet, dass** zunächst ein Greifer (20) zu dem Schneidmittel (26) bewegt wird, anschließend das Schneidmittel (26) und/oder einen mit dem Schneidmittel (26) verbundenen Träger (24) durch den Greifer (20) gegriffen wird und anschließend der Greifer (20) mit dem Schneidmittel (26) entlang der Schneidwelle (28) bewegt wird.

13. Verfahren nach einem der vorhergehenden Verfahrensansprüche, **dadurch gekennzeichnet, dass** die Verstelleinrichtung (15) zumindest ein nicht für den Produktionsprozess benötigtes Schneidmittel (26) in einen Parkbereich (32) bringt.

14. Verfahren nach einem der vorhergehenden Verfahrensansprüche 12-13 **dadurch gekennzeichnet, dass** zum Lösen oder Fixieren des Schneidmittels (26) bzw. des Halters (24) an der Schneidwelle (28) die Verstelleinrichtung (15) und/oder die Schneidwelle (28) eine Relativbewegung zwischen dem Schneidmittel (26) bzw. dem Halter (24) und der Schneidwelle (28) erzeugt.

## Claims

1. Device for cutting a product of confectionery mass,
comprising at least one transport device (10) for a transport of the product that is to be cut, at least one further transport device (14) and at least one cutting apparatus (25) comprising a plurality of cutter means (26) which are arranged on at least one cutting shaft (28),
the transport device (10) being implemented to feed a carpet of products to be cut to the cutting apparatus (25) in a transport direction (11),
the further transport device (14) being implemented to remove the cut product from the cutting apparatus (25) for further processing,
**characterised in that** at least one adjustment device (15) is provided for a displacement of the cutter means (26) along the cutting shaft (28).

2. Device according to claim 1,
**characterised in that** at least one fixation device (33) is provided for a releasable fixation of the cutter means (26) on the cutting shaft (25).

3. Device according to one of the preceding claims,
**characterised in that** the adjustment device (15) is configured for a releasing or a fixation of the cutter means (26) to the cutting shaft (28) on the fixation device (33).

4. Device according to one of the preceding claims,
**characterised** i**n that** the adjustment device (15) is implemented for moving at least one gripper (20) to the cutter means (26), for gripping the cutter means (26) and/or a carrier (24) that is connected with the cutter means (26) and for moving the gripper (24) with the cutter means (26) along the cutting shaft (28).

5. Device according to one of the preceding claims,
**characterised in that** for a releasing or a fixation of the cutter means (26) relative to the cutting shaft (28), the adjustment device (15) and/or the cutting shaft (28) are/is implemented for generating a relative movement between the cutter means (26) and the cutting shaft (28).

6. Device according to one of the preceding claims,
**characterised In that** the adjustment device (15) comprises at least one gripper (20) and/or at least one gripper arm (22) and/or a carriage (18) and/or a guidance (16).

7. Device according to one of claims 2-6,
**characterised in that** the fixation device (33) comprises at least one spline shaft (34), in particular as a component of the cutting shaft (28), and/or at least one wedge-shaped region (37) on the spline shaft (34) and/or on a carrier (24) of the cutter means (26) and/or at least one clamping arm (40) and/or at least one traverse (42) for operating a clamping arm (40).

8. Device according to one of the preceding claims,
**characterised In that** at least one parking region (32) is provided for receiving such cutter means (26) which are not required for cutting the product.

9. Method for cutting a product of confectionery mass,
wherein a transport device (10) transports a product that is to be cut to a cutting apparatus (25),
wherein a plurality of cutter means (26) are arranged on at least one cutting shaft (28),
wherein the transport device (10) feeds a carpet of products to be cut to the cutting apparatus (25) in a transport direction (11),
wherein a further transport device (14) removes the cut product from the cutting apparatus (25) for further processing,
**characterised in that** at least one adjustment device (15) displaces at least one cutter means (26) along the cutting shaft (28).

10. Method according to the preceding method claim,
**characterised In that** first a fixation device (33), which releasably fixates the cutter means (26) with the cutting shaft (28), is released, after that the cutting apparatus (25) is displaced along the cutting shaft (28) and then the cutter means (26) is re-fixated with the cutting shaft (28) by the fixation device (33).

11. Method according to one of the preceding method claims,
**characterised in that** for a releasing or a fixation of the cutter means (26) on the cutting shaft (28), the adjustment device (15) acts onto the fixation device (33).

12. Method according to one of the preceding method claims.
**characterised in that** first a gripper (20) is moved to the cutter means (26), after that the cutter means (26) and/or a carrier (24) that is connected with the cutter means (26) are/is gripped by the gripper (20) and then the gripper (20) with the cutter means (26) is moved along the cutting shaft (28).

13. Method according to one of the preceding method claims,
**characterised In that** the adjustment device (15) takes at least one cutter means (26), which is not required for the production process, into a parking region (32).

14. Method according to one of the preceding method claims 12-13,
**characterised In that** for a releasing or a fixation of the cutter means (26) and/or of the holder (24) on the cutting shaft (28), the adjustment device (15) and/or the cutting shaft (28) generate/generates a relative movement between the cutter means (26) and/or the holder (24) and the cutting shaft (28).

## Revendications

1. Dispositif pour le découpage d'un produit d'une masse de confiserie, comprenant au moins un dispositif de transport (10) pour transporter le produit qui est à couper, au moins un autre dispositif de transport (14) et au moins un appareil de découpe (25), comprenant plusieurs moyens coupeurs (26) disposés sur au moins un arbre de découpe (28).
où le dispositif de transport (10) est configuré à alimenter un tapis de produits à couper à l'appareil de découpe (25),
où l'autre dispositif de transport (14) est configuré à enlever le produit découpé de l'appareil de découpe (25) pour un traitement subséquent,
**caractérisé en ce qu'**au moins un dispositif d'ajustement (15) est prévu pour un déplacement du moyen coupeur (26) le long de l'arbre de découpe (28).

2. Dispositif selon la revendication 1,
**caractérisé en ce qu'**au moins un dispositif de fixage (33) est prévu pour un fixage relâchable du moyen coupeur (26) sur l'arbre de découpe (28).

3. Dispositif selon l'une quelconque des revendications précédentes,
**caractérisé en ce que** l'unité d'ajustement (15) est configurée pour un relâche ou un fixage du moyen coupeur (26) sur l'arbre de découpe (28) au dispositif de fixage (33).

4. Dispositif selon l'une quelconque des revendications précédentes,
**caractérisé en ce que** l'unité d'ajustement (15) est configurée à mouvoir au moins un préhenseur (20) au moyen coupeur (26), saisir le moyen coupeur (26) et/ou une porteuse (24) raccordée au moyen coupeur (26) et mouvoir le préhenseur (20) avec le moyen coupeur (26) le long de l'arbre de découpe (28).

5. Dispositif selon l'une quelconque des revendications précédentes,
**caractérisé en ce que** pour un relâche ou fixage du moyen coupeur (26) relativement à l'arbre de découpe (28), le dispositif d'ajustement (15) et/ou l'arbre de découpe (28) sont/est configurés/configuré pour générer un mouvement relatif entre le moyen coupeur (26) et l'arbre de découpe (28).

6. Dispositif selon l'une quelconque des revendications précédentes,
**caractérisé en ce que** l'unité d'ajustement (15) comprend au moins un préhenseur (20) et/ou au moins un bras préhenseur (22) et/ou un chariot (18) et/ou un guidage (16).

7. Dispositif selon l'une des revendications 2 à 6,
**caractérisé en ce que** l'unité de fixage (33) comporte au moins un arbre cannelé (34), en particulier constituant un composant de l'arbre de découpe (28), et/ou au moins une zone cunéiforme (37) sur l'arbre cannelé (34) et/ou sur une porteuse (24) du moyen coupeur (26), et/ou au moins un bras de serrage (40) et/ou au moins une traverse (42) pour opérer un bras de serrage (40).

8. Dispositif selon l'une quelconque des revendications précédentes,
**caractérisé en ce qu'**au moins une zone de rangement (32) est prévue pour recevoir tels moyens coupeurs (26) qui ne sont pas requis pour le découpage du produit.

9. Procédé pour le découpage d'un produit d'une masse de confiserie,
où un dispositif de transport (10) transporte un produit qui est à couper à un appareil de découpe (25),
où plusieurs moyens coupeurs (26) sont disposés sur au moins un arbre de découpe (28),
où le dispositif de transport (10) alimente un tapis de produits à couper à l'appareil de découpe (25) en direction de transport (11),
où un autre dispositif de transport (10) enlève le produit découpé de l'appareil de découpe (25) pour un traitement subséquent,
**caractérisé en ce qu'**au moins un dispositif d'ajustement (15) déplace au moins un moyen coupeur (26) le long de l'arbre de découpe (28).

10. Procédé selon la revendication de procédé précédente,
**caractérisé en ce que** tout d'abord un dispositif de fixage (33), qui fixe le moyen coupeur (26) relâchablement avec l'arbre de découpe (28), est relâché, ensuite l'appareil de découpe (25) est déplacé le long de l'arbre de découpe (28) et puis le moyen coupeur (26) est refixé avec l'arbre de découpe (28) par le dispositif de fixage (33).

11. Procédé selon l'une des revendications de procédé précédentes,
**caractérisé en ce que** pour un relâche ou un fixage du moyen coupeur (26) sur l'arbre de découpe (28), le dispositif d'ajustement (15) agit sur le dispositif de fixage (33).

12. Procédé selon l'une des revendications de procédé précédentes,
**caractérisé en ce que** tout d'abord un préhenseur (20) est mu au moyen coupeur (26), ensuite le moyen coupeur (26) et/ou une porteuse (24) reliée au moyen coupeur (26) sont/est saisi/e/s par le préhenseur (20) et puis le préhenseur (20) avec le moyen coupeur (26) est mu le long de l'arbre de découpe (28).

13. Procédé selon l'une des revendications précédentes,
**caractérisé en ce que** le dispositif d'ajustement (15) mène au moins un moyen coupeur (26) qui n'est pas requis pour le procès productif dans une zone de rangement (32).

14. Procédé selon l'une des revendications de procédé précédentes 12 et 13,
**caractérisé en ce que** pour un relâche ou un fixage du moyen coupeur (26) et/ou de la porteuse (24) sur l'arbre de découpe (28), le dispositif d'ajustement (15) et/ou l'arbre de découpe (28) génèrent/génère un mouvement relatif entre le moyen coupeur (26) et/ou la porteuse (24) et l'arbre de découpe (28).
